# EUROPEAN PATENT APPLICATION

(11) **EP 4 155 813 A1**
(43) Date of publication of application: **29.03.2023**
(21) Application number: 21808773.2
(22) Date of filing: 28.04.2021
(51) Int. Cl.: G02B 30/27

(54) **LENS GRATING AND MANUFACTURING METHOD THEREFOR**

(30) Priority: 22.05.2020 CN 202010439809
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Zacco GmbH
(86) International application number: PCT/CN2021/090670
(87) International publication number: WO 2021/233105

(57) **Abstract**

The present application relates to the technical field of display, and discloses a lens grating (100), including a substrate (101) and at least two lenses (102) arranged at any side of the substrate (101), where a light-shading structure (103) is arranged corresponding to a junction region between adjacent lenses (102) in the at least two lenses (102). light emitted towards the lens grating (100) is shaded by at least one light-shading structure (103) formed in the junction region between the adjacent lenses (102) in the at least two lenses (102) of the substrate (101), thereby solving a problem of wrong light projection position of subpixels caused by a distortion region formed by an irregular cross-sectional structure in the junction region between the adjacent lenses (102) of the lens grating (100), and reducing or eliminating crosstalk of images for left and right eyes. The present application further discloses a manufacturing method of the lens grating (100).

## Description

The present application claims priority to the Chinese Patent Application with an application number of 202010439809.X and a title of "*Lens Grating and Manufacturing Method Thereof*"*,* filed to China National Intellectual Property Administration on May, 22nd, 2020, the disclosures of which are hereby incorporated by reference.

### TECHNICAL FIELD

The present application relates to the technical field of display, and for example, relates to a lens grating and a manufacturing method thereof

### BACKGROUND

At present, the lens grating is widely used in 3D display; and 3D displays based on the lens grating enable users to directly acquire a 3D viewing effect by left and right eyes without using 3D glasses.

In the process of realizing embodiments of the present disclosure, at least the following problems are found in the related technologies: in a manufacturing process of the lens grating, due to precision limitation of the manufacturing process, an irregular cross-sectional structure generated at a junction between two lenses of the lens grating is easy to form a distortion region. When light of subpixels passes through the distortion region, the light is easily projected to a wrong position, thereby causing crosstalk of images for left and right eyes.

### SUMMARY

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a lens grating and a manufacturing method thereof, to solve a technical problem of crosstalk of images for left and right eyes due to wrong projection position of light of subpixels resulted from an irregular cross-sectional structure generated at a junction between two lenses of the lens grating.

In some embodiments, embodiments of the present disclosure provide a lens grating, including a substrate and at least two lenses arranged at any side of the substrate;
where a light-shading structure is arranged corresponding to a junction region between adjacent lenses in the at least two lenses.

In some embodiments, the at least two lenses may include at least one of concave lenses and convex lenses.

In some embodiments, the at least two lenses may include at least one of lenticular lenses and spherical lenses.

In some embodiments, the at least two lenses may include the lenticular lenses; and part or all of the lenticular lenses are distributed in parallel.

In some embodiments, a length of the light-shading structure along an axial direction of the lenticular lens may be the same as an axial length of the lenticular lens.

In some embodiments, the at least two lenses may include spherical lenses; and part or all of the spherical lenses are distributed in array.

In some embodiments, the light-shading structure penetrates through the substrate in a thickness direction of the substrate.

In some embodiments, one end of the light-shading structure in the thickness direction of the substrate penetrates through the substrate.

In some embodiments, one end of the light-shading structure includes at least one of followings:
one end of the light-shading structure close to the at least two lenses;
one end of the light-shading structure away from the at least two lenses.

In some embodiments, one end of the light-shading structure close to the at least two lenses protrudes from a surface of the substrate close to the at least two lenses.

In some embodiments, a portion of the light-shading structure protruding from the surface of the substrate extends to the interior of a corresponding lens or extends to the junction between the corresponding lenses.

In some embodiments, a projected area of a portion of the light-shading structure protruding from the surface of the substrate on the surface of the substrate is the same as a projected area of a portion of the light-shading structure in the substrate on the surface of the substrate; or
the projected area of the portion of the light-shading structure protruding from the surface of the substrate on the surface of the substrate is greater than a projected area of the portion of the light-shading structure in the substrate on the surface of the substrate; or
the projected area of the portion of the light-shading structure protruding from the surface of the substrate on the surface of the substrate is smaller than a projected area of the portion of the light-shading structure in the substrate on the surface of the substrate.

In some embodiments, the light-shading structure is wholly arranged in the substrate.

In some embodiments, the light-shading structure is arranged at the surface of the substrate close to the at least two lenses.

In some embodiments, the light-shading structure is arranged at the junction between the adjacent lenses.

In some embodiments, one end of the light-shading structure away from the substrate along the thickness direction of the substrate extends to the junction between the corresponding lenses; and one end of the light-shading structure close to the substrate extends to one side of the substrate close to the at least two lenses.

In some embodiments, the light-shading structure is wholly arranged in the at least two lenses.

In some embodiments, the substrate is a whole substrate.

In some embodiments, the substrate is a partial substrate; and the light-shading structure is arranged at a surface of the partial substrate,
where a filling material is arranged at one side, provided with the light-shading structure, of the partial substrate.

In some embodiments, surfaces of the at least two lenses are provided with anti-reflection layers.

In some embodiments, surfaces of the anti-reflection layers are provided with a covering layer.

In some embodiments, embodiments of the present disclosure provide a display module, including the lens grating.

In some embodiments, embodiments of the present disclosure provide a display screen, including the display module.

In some embodiments, embodiments of the present disclosure provide a display, including the display screen.

In some embodiments, embodiments of the present disclosure provide a manufacturing method of the lens grating, including:
providing a substrate;
forming at least one light-shading structure and at least two lenses on the substrate, so that the light-shading structure corresponds to a junction region between adjacent lenses in the at least two lenses.

In some embodiments, the at least two lenses formed include concave lenses.

In some embodiments, the at least two lenses include at least one of lenticular lenses and spherical lenses.

In some embodiments, the at least two lenses include the lenticular lenses;
forming at least two lenses on the substrate includes:
arranging part or all of the lenticular lenses on the substrate in parallel.

In some embodiments, the manufacturing method further includes:
setting an axial length of the lenticular lens to be the same as a length of the light-shading structure along an axial direction of the lenticular lens.

In some embodiments, the at least two lenses include the spherical lenses;
forming at least two lenses on the substrate includes:
arranging part or all of the spherical lenses on the substrate in array.

In some embodiments, forming at least one light-shading structure and at least two lenses on the substrate includes:
forming the at least one light-shading structure and the at least two lenses on one side of the substrate integrally, where the light-shading structure is arranged at a junction between adjacent lenses in the at least two lenses.

In some embodiments, forming at least one light-shading structure and at least two lenses on the substrate includes:
forming the at least two lenses on one side of the substrate;
forming the at least one light-shading structure on the substrate; or, forming the at least one light-shading structure on the at least two lenses; or, forming the at least one light-shading structure on the substrate and the at least two lenses, respectively.

In some embodiments, forming the at least one light-shading structure on the substrate includes:
forming an opening in the substrate corresponding to a junction region between adjacent lenses in the at least two lenses along a thickness direction of the substrate;
filling the opening with a light shading material to form the light-shading structure.

In some embodiments, filling the opening with the light shading material includes:
filling the opening with the light shading material wholly; or
filling the opening with the light shading material partially.

In some embodiments, after filling the opening with the light shading material partially, the manufacturing method further includes:
arranging a filling material on the surface of the light shading material.

In some embodiments, forming the opening along the thickness direction of the substrate includes:
forming the opening from one side of the substrate away from the at least two lenses, so that the opening extends to the interior of the substrate, or penetrates through the substrate, or extends to the interior of a corresponding lens, or extends to the junction between corresponding lenses.

In some embodiments, forming the at least one light-shading structure on the at least two lenses includes:
forming the light-shading structure at a junction between adjacent lenses in the at least two lenses.

In some embodiments, forming the at least one light-shading structure on the at least two lenses includes:
forming an opening on the at least two lenses corresponding to the junction region between adjacent lenses along the thickness direction of the substrate;
filling the opening with a light shading material to form the light-shading structure.

In some embodiments, forming the opening on the at least two lenses corresponding to the junction region between adjacent lenses along the thickness direction of the substrate includes:
forming the opening from one side of the at least two lenses away from the substrate, so that the opening extends to the interior of a corresponding lens, or extends to one side of the substrate close to the at least two lenses, or extends to the interior of the substrate, or extends to one side of the substrate away from the at least two lenses.

In some embodiments, forming at least one light-shading structure and at least two lenses on the substrate includes:
forming the at least one light-shading structure on the substrate;
forming the at least two lenses on one side of the substrate.

In some embodiments, forming the at least one light-shading structure on the substrate includes:
forming the light-shading structure on the surface of the substrate.

In some embodiments, forming the at least one light-shading structure on the substrate includes:
forming an opening at a preset position of the substrate;
filling the opening with a light shading material to form the light-shading structure.

In some embodiments, forming the opening at the preset position of the substrate includes:
forming the opening from one side of the substrate along the thickness direction of the substrate, so that the opening extends to the interior of the substrate or extends to the other side of the substrate.

In some embodiments, filling the opening with the light shading material includes:
filling the opening with the light shading material wholly; or
filling the opening with the light shading material partially.

In some embodiments, after filling the opening with the light shading material partially, the manufacturing method further includes:
arranging a filling material on the surface of the light shading material.

In some embodiments, after filling the opening with the light shading material wholly, the manufacturing method further includes:
filling a region, corresponding to an opening end of the opening, on the surface of the substrate with the light shading material, so that one portion of the formed light-shading structure protrudes from the surface of the substrate.

In some embodiments, forming the at least two lenses on one side of the substrate includes:
arranging the at least two lenses on one side of the substrate where the light-shading structure protrudes from the substrate, so that a portion, protruding from the surface of the substrate, of the light-shading structure corresponds to the junction region between adjacent lenses in the at least two lenses.

In some embodiments, the substrate is a whole substrate.

In some embodiments, the substrate is a partial substrate.

After forming the at least one light-shading structure on the substrate, the manufacturing method further includes:
arranging a filling material on one side, provided with the light-shading structure, of the partial substrate.

In some embodiments, the manufacturing method further includes:
forming anti-reflection layers on surfaces of the at least two lenses.

In some embodiments, after forming the anti-reflection layers on the surfaces of the at least two lenses, the manufacturing method further includes:
forming a covering layer on surfaces of the anti-reflection layers.

The lens grating and the manufacturing method thereof provided by the embodiments of the present disclosure may achieve the following technical effects:
Light emitted towards the lens grating is shaded by at least one light-shading structure formed in the junction region between adjacent lenses in the at least two lenses of the substrate, thereby solving a problem of wrong light projection position of subpixels caused by a distortion region formed by an irregular cross-sectional structure in the junction region between the adjacent lenses of the lens grating, and reducing or eliminating crosstalk of images for left and right eyes.

The above general description and the following description are exemplary and explanatory only, and are not intended to limit the present application.

### DESCRIPTION OF DRAWINGS

One or more embodiments are illustrated by the corresponding drawings, and the illustrations and drawings do not limit the embodiments. Elements having the same reference numerals in the drawings are shown as similar elements, and the drawings are not intended to limit the scale, where:
Fig. 1 is a schematic diagram of a cross-sectional structure of a lens grating provided by an embodiment of the present disclosure;
Fig. 2A is a schematic diagram of arrangement of a plurality of lenticular lenses in a lens grating provided by embodiments of the present disclosure;
Fig. 2B is a schematic diagram of another arrangement of the plurality of lenticular lenses in the lens grating provided by embodiments of the present disclosure;
Fig. 2C is a schematic diagram of arrangement of a plurality of spherical lenses in the lens grating provided by embodiments of the present disclosure;
Fig. 2D is a schematic diagram of another arrangement of the plurality of spherical lenses in the lens grating provided by embodiments of the present disclosure;
Fig. 2E is a schematic diagram of arrangement of a plurality of spherical lenses and a plurality of lenticular lenses in the lens grating provided by embodiments of the present disclosure;
Fig. 3 is a cross-sectional view of Fig. 2A along a line A-A;
Figs. 4, 5, 6, 7A, 7B, 7C, 7D, 7E, 7F, 8A, 8B, 8C, 8D, 8E, 8F, 9, 10, 11, 12 and 13 are schematic diagrams of cross-sectional structures of the lens grating provided by embodiments of the present disclosure;
Figs. 14A and 14B are schematic diagrams of a cross-sectional structure of a lens grating, a lens surface of which is provided with an anti-reflection layer, provided by embodiments of the present disclosure;
Figs. 15A and 15B are schematic diagrams of a cross-sectional structure of a lens grating provided with a covering layer provided by embodiments of the present disclosure;
Fig. 16 is a schematic diagram of another cross-sectional structure of the lens grating provided by embodiments of the present disclosure;
Fig. 17 is a structural schematic diagram of a display module provided by embodiments of the present disclosure;
Fig. 18 is a structural schematic diagram of a display screen provided by embodiments of the present disclosure;
Fig. 19 is a structural schematic diagram of a display provided by embodiments of the present disclosure;
Fig. 20 is a flow chart of a manufacturing method of the lens grating provided by embodiments of the present disclosure;
Fig. 21A is a schematic diagram of a cross-sectional structure of arranging a filling material in the manufacturing method of the lens grating provided by embodiments of the present disclosure;
Fig. 21B is a schematic diagram of a cross-sectional structure of an imprint template in the manufacturing method of the lens grating provided by embodiments of the present disclosure;
Fig. 21C is a schematic diagram of a cross-sectional structure of arranging a light shading material on a lens surface of the imprint template in the manufacturing method of the lens grating provided by embodiments of the present disclosure;
Fig. 21D is a schematic diagram of a cross-sectional structure of performing impression treatment on a lens material in the manufacturing method of the lens grating provided by embodiments of the present disclosure;
Fig. 21E is a schematic diagram of a cross-sectional structure of integrally forming lenses and a light shading material in the manufacturing method of the lens grating provided by embodiments of the present disclosure;
Fig. 22 is another flow chart of the manufacturing method of the lens grating provided by embodiments of the present disclosure;
Figs. 23A, 23B, 23C and 23D are schematic diagrams of a cross-sectional structure of an imprint template in the manufacturing method of the lens grating provided by embodiments of the present disclosure;
Figs. 24A, 24B, 24C, 24D, 25A, 25B, 25C, 25D, 26A, 26B, 26C and 26D are schematic diagrams of cross-sectional structures of forming a light-shading structure in the manufacturing method of the lens grating provided by embodiments of the present disclosure;
Figs. 27A, 27B, 27C and 27D are schematic diagrams of cross-sectional structures of forming an opening in the manufacturing method of the lens grating provided by embodiments of the present disclosure;
Figs. 28A, 28B, 28C, 28D, 29A, 29B, 29C, 29D, 30A, 30B, 30C and 30D are schematic diagrams of cross-sectional structures of forming a light-shading structure in the manufacturing method of the lens grating provided by embodiments of the present disclosure;
Fig. 31 is another flow chart of the manufacturing method of the lens grating provided by embodiments of the present disclosure;
Fig. 32 is a schematic diagram of another cross section of forming the light-shading structure on the substrate in the manufacturing method of the lens grating provided by embodiments of the present disclosure;
Fig. 33 is another flow chart of the manufacturing method of the lens grating provided by embodiments of the present disclosure;
Figs. 34A and 34B are schematic diagrams of cross-sectional structures of forming an opening on the substrate in the manufacturing method of the lens grating provided by embodiments of the present disclosure;
Figs. 35A, 35B, 36A, 36B, 37A, 37B, 38A and 38B are schematic diagrams of cross-sectional structures of forming a light-shading structure on the substrate in the manufacturing method of the lens grating provided by embodiments of the present disclosure; and
Fig. 39 is a schematic diagram of another cross section of forming an anti-reflection layer on the lens surface in the manufacturing method of the lens grating provided by embodiments of the present disclosure.

Reference numerals:
100: lens grating; 101: substrate; 102: lens; 1021: lenticular lens; 1022: spherical lens; 103: light-shading structure; 104: anti-reflection layer; 105: covering layer; 106: filling material; 107: opening; 200: display module; 300: display screen; 400: display; 500: imprint template; 501: lens; 201: partial substrate; and 202: filling material.

### DETAILED DESCRIPTION

To understand features and technical contents of embodiments of the present disclosure in more detail, implementation of the embodiments of the present disclosure is described in detail below with reference to accompanying drawings; and the accompanying drawings are used for reference only, rather than limiting the embodiments of the present disclosure. In following technical description, for the convenience of explanation, a thorough understanding of the disclosed embodiments is provided through more details. However, one or more embodiments may be implemented without the details. In other cases, to simplify the accompanying drawings, well-known structures and apparatuses may be shown simplistically.

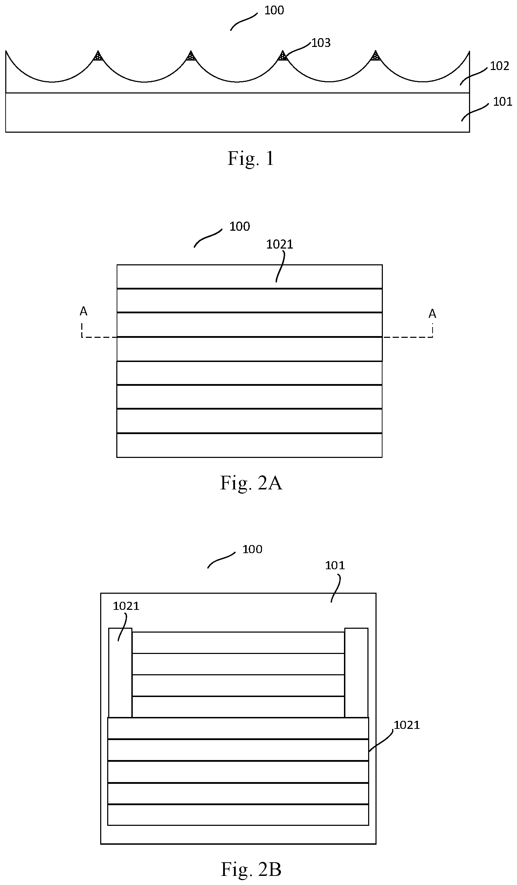

Referring to Fig. 1, in some embodiments, a lens grating 100 is provided, including a substrate 101 and at least two lenses 102 arranged at any side of the substrate 101;
where a light-shading structure 103 may be arranged corresponding to a junction region between adjacent lenses 102 in the at least two lenses 102.

Optionally, light emitted towards the lens grating 100 is shaded by at least one light-shading structure 103 formed in the junction region between the adjacent lenses 102 in the at least two lenses 102 of the substrate 101, thereby solving a problem of wrong light projection position of subpixels caused by a distortion region formed by an irregular cross-sectional structure in the junction region between the adjacent lenses 102 of the lens grating 100, reducing or eliminating crosstalk of images for left and right eyes, and improving display quality of 3D images.

In some embodiments, a manufacturing process of forming the light-shading structure 103 on the substrate 101 may include at least one of: etching, filling, inkjet-printing, imprinting and screen printing.

In some embodiments, the substrate 101 may be a whole substrate.

In some embodiments, the at least two lenses 102 may be manufactured by a nano-imprint lithography: coating the substrate 101 with a lens material used for manufacturing the lenses 102, and forming at least two lenses 102 in a nano-imprinting mode.

In some embodiments, the at least two lenses 102 may also be manufactured by a hot-melt method: laying a material used for manufacturing the lenses 102 on the substrate 101, photoetching the material used for manufacturing the lenses 102, heating a remaining part after photoetching, forming a shape of the lens 102 under the action of surface tension, and cooling to form the at least two lenses 102.

In some embodiments, the at least two lenses 102 may also be manufactured by an etching method: laying a material layer used for manufacturing the lenses 102 on the substrate 101, depositing photoresist on the material layer used for manufacturing the lenses 102, photoetching to form a shape of the lens 102, etching the material layer of the lenses 102 with the photoresist as a mask to form the at least two lenses 102, and then removing the remaining photoresist.

In some embodiments, the at least two lenses 102 may include at least one of lenticular lenses 1021 and spherical lenses 1022. Optionally, the lenticular lens 1021 may include at least one of a lenticular concave lens, a lenticular convex lens, and a combination of the lenticular convex lens and the lenticular concave lens. Optionally, the spherical lens 1022 may include at least one of a spherical concave lens, a spherical convex lens, a combination of the spherical concave lens and the spherical convex lens. Optionally, the plurality of lenses 102 may include at least one of a combination of the lenticular convex lens and the spherical convex lens, a combination of the lenticular convex lens and the spherical concave lens, a combination of the lenticular concave lens and the spherical concave lens, and a combination of the lenticular concave lens and the spherical convex lens.

In some embodiments, the at least two lenses 102 may include at least one of concave lenses and convex lenses. Embodiments of the present disclosure are described below by taking a case that the lenses 102 may be concave lenses as an example.

In some embodiments, no matter whether the lens 102 includes the lenticular lens 1021 or the spherical lens 1022 or has other shapes, at least one curve of a surface of the lens 102 macroscopically may be of a circular or noncircular shape, such as ellipse, hyperbola, parabola and other shapes. Optionally, at least one curve of the surface of the lens 102 microscopically may be of a noncircular shape, such as polygon and other noncircular shapes. Optionally, the shape of the lens 102 may be determined according to actual conditions such as process requirements, for example, the shape of the surface of the lens 102.

In some embodiments, the at least two lenses 102 may include the lenticular lenses 1021; and part or all of the lenticular lenses 1021 may be arranged in parallel.

Referring to Fig. 2A, in some embodiments, all of the lenticular lenses 1021 may be arranged in parallel.

Referring to Fig. 2B, in some embodiments, part of the lenticular lenses 1021 may be arranged in parallel. Optionally, part of the lenticular lenses 1021 may be arranged according to a preset direction; the preset direction may include a direction forming a preset angle with the arrangement direction of the lenticular lenses 1021 arranged in parallel; and the setting of the preset angle may be considered according to actual conditions such as process requirements.

In some embodiments, the at least two lenses 102 may include spherical lenses 1022; and part or all of the spherical lenses 1022 may be arranged in array.

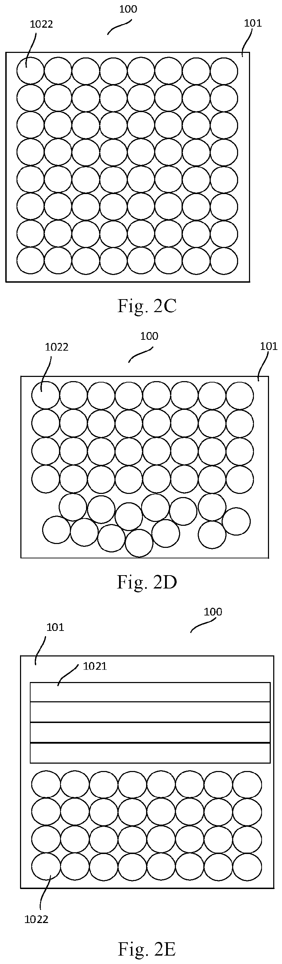

Referring to Fig. 2C, in some embodiments, all of the spherical lenses 1022 may be arranged in array.

Referring to Fig. 2D, in some embodiments, part of the spherical lenses 1022 may be arranged in array. Optionally, the number of spherical lenses 1022 and spatial arrangement of the spherical lenses 1022 on the substrate 101 may be determined according to actual conditions such as process requirements.

Referring to Fig. 2E, in some embodiments, the at least two lenses 102 may include lenticular lenses 1021 and spherical lenses 1022. All the lenticular lenses 1021 may be arranged on the substrate 101 in parallel; and all the spherical lenses 1022 may be arranged on the substrate 101 in array. Optionally, all the lenticular lenses 1021 may be arranged on the substrate 101 in parallel; and part of the spherical lenses 1022 may be arranged on the substrate 101 in array. Optionally, part of the lenticular lenses 1021 may be arranged on the substrate 101 in parallel; and all the spherical lenses 1022 may be arranged on the substrate 101 in array. Optionally, part of the lenticular lenses 1021 may be arranged on the substrate 101 in parallel; and part of the spherical lenses 1022 may be arranged on the substrate 101 in array. The number of the lenticular lenses 1021 and the spherical lenses 1022 and spatial arrangement on the substrate 101 may be determined according to actual conditions such as process requirements.

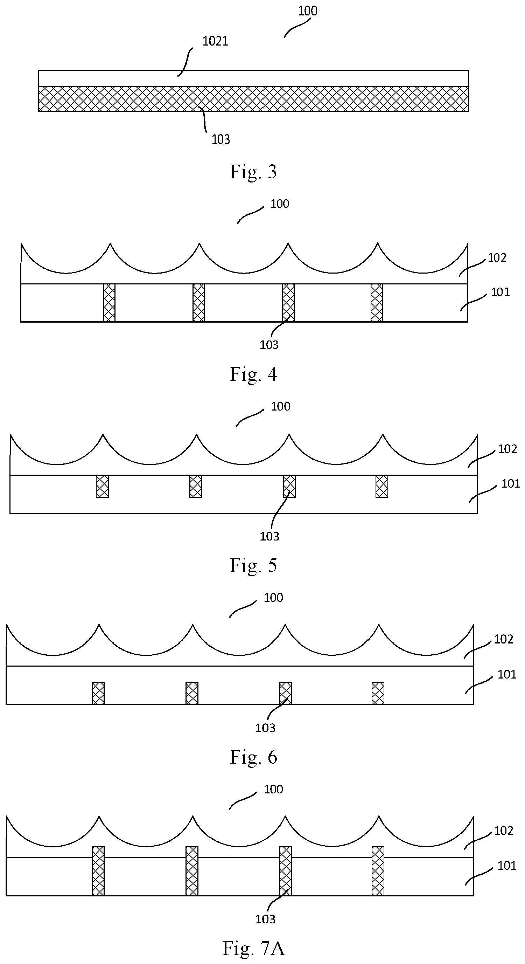

Referring to Fig. 3, in some embodiments, a length of the light-shading structure 103 in an axial direction of the lenticular lens 1021 may be the same as an axial length of the lenticular lens 1021. The setting of a length of the lenticular lens 1021 in the axial direction and the length of the light-shading structure 103 in the axial direction of the lenticular lens 1021 may be considered according to actual conditions such as process requirements.

In some embodiments, a width of the light-shading structure 103 in an arrangement direction of the lenses 102 may be set to eliminate stray light at a junction between the adjacent lenses 102.

Referring to Fig. 1, in some embodiments, the light-shading structure 103 may be arranged at the junction between the adjacent lenses 102. Optionally, a manufacturing process of forming the light-shading structure 103 at the junction between the adjacent lenses 102 may include at least one of: etching, filling, inkjet-printing, imprinting and screen printing. Optionally, the light-shading structure 103 may be formed at the junction between the adjacent lenses 102 by a manufacturing process such as imprinting.

Embodiments of the present disclosure will be described below by forming the light-shading structure 103 by a manufacturing process such as etching and filling.

Referring to Fig. 4, in some embodiments, the light-shading structure 103 may penetrate through the substrate 101 in a thickness direction of the substrate 101.

In some embodiments, one end of the light-shading structure 103 in the thickness direction of the substrate 101 may penetrate through the substrate 101. Optionally, one end of the light-shading structure103 may include at least one of followings:
one end, close to the at least two lenses 102, of the light-shading structure 103;
one end, away from the at least two lenses 102, of the light-shading structure 103.

Referring to Fig. 5, in some embodiments, one end of the light-shading structure 103 close to the at least two lenses 102 in the thickness direction of the substrate 101 may penetrate through the substrate 101.

Referring to Fig. 6, in some embodiments, one end of the light-shading structure 103 away from the at least two lenses 102 in the thickness direction of the substrate 101 may penetrate through the substrate 101.

In some embodiments, the end of the light-shading structure 103 close to the at least two lenses 102 may protrude from a surface of the substrate 101 close to the at least two lenses 102.

In some embodiments, a portion of the light-shading structure 103 protruding from the surface of the substrate 101 may extend to the interior of a corresponding lens 102 or extends to the junction between the corresponding lenses 102.

Referring to Figs. 7A-7F, in some embodiments, the portion of the light-shading structure 103 protruding from the surface of the substrate 101 extends to the interior of the corresponding lens 102.

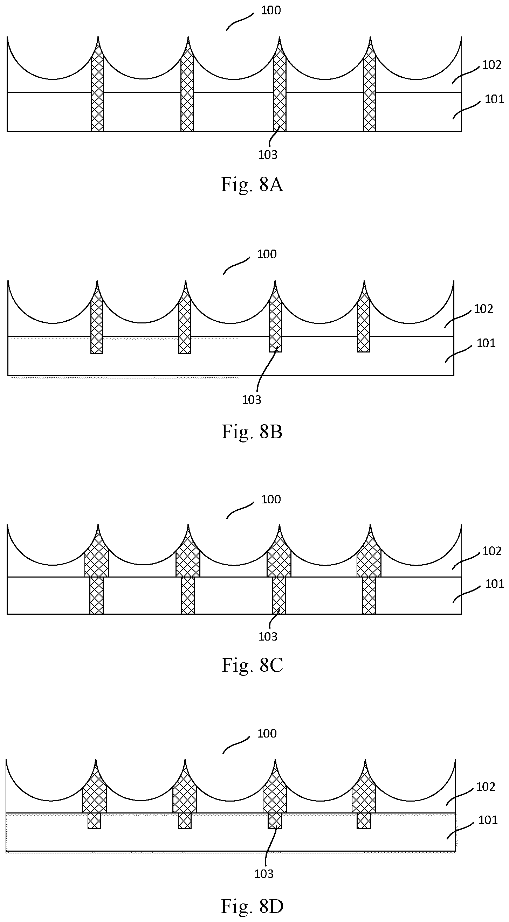

Referring to Figs. 8A-8F, in some embodiments, the portion of the light-shading structure 103 protruding from the surface of the substrate 101 extends to the junction between the corresponding lenses 102.

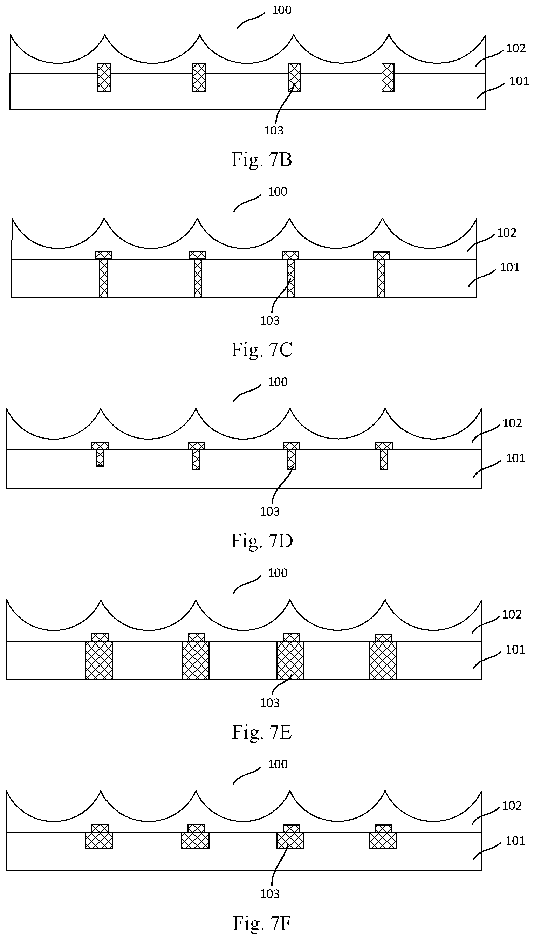

Referring to Figs. 7A, 7B, 8A and 8B, in some embodiments, a projected area of the portion of the light-shading structure 103 protruding from the surface of the substrate 101 on the surface of the substrate 101 may be equal to that of a portion of the light-shading structure 103 inside the substrate 101 on the surface of the substrate 101.

Referring to Figs. 7C, 7D, 8C and 8D, in some embodiments, a projected area of the portion of the light-shading structure 103 protruding from the surface of the substrate 101 on the surface of the substrate 101 may be greater than that of the portion of the light-shading structure 103 inside the substrate 101 on the surface of the substrate 101.

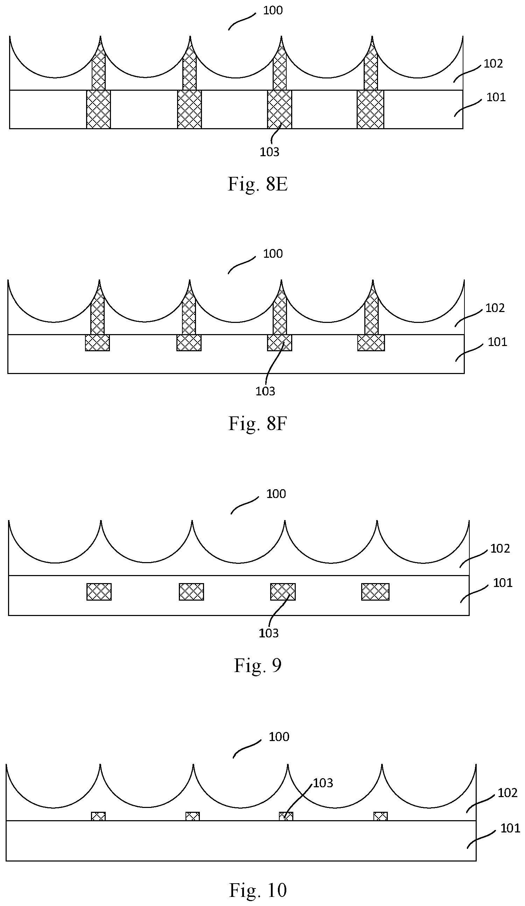

Referring to Figs. 7E, 7F, 8E and 8F, in some embodiments, a projected area of the portion of the light-shading structure 103 protruding from the surface of the substrate 101 on the surface of the substrate 101 may be smaller than that of the portion of the light-shading structure 103 inside the substrate 101 on the surface of the substrate 101.

In some embodiments, the light-shading structure 103 may include at least one of a light absorbing material or a light reflecting material. The type of the light shading material may be determined according to actual process requirements and other conditions.

In some embodiments, light shading materials of various light-shading structures 103 may be the same or different.

In some embodiments, the light shading material of the portion of the light-shading structure 103 protruding from the surface of the substrate 101 may be the same as or different from that of the portion located in the substrate 101.

Referring to Fig. 9, in some embodiments, the light-shading structure 103 may be wholly arranged in the substrate 101.

Referring to Fig. 10, in some embodiments, the light-shading structure 103 may be arranged on the surface of the substrate 101 close to the at least two lenses 102.

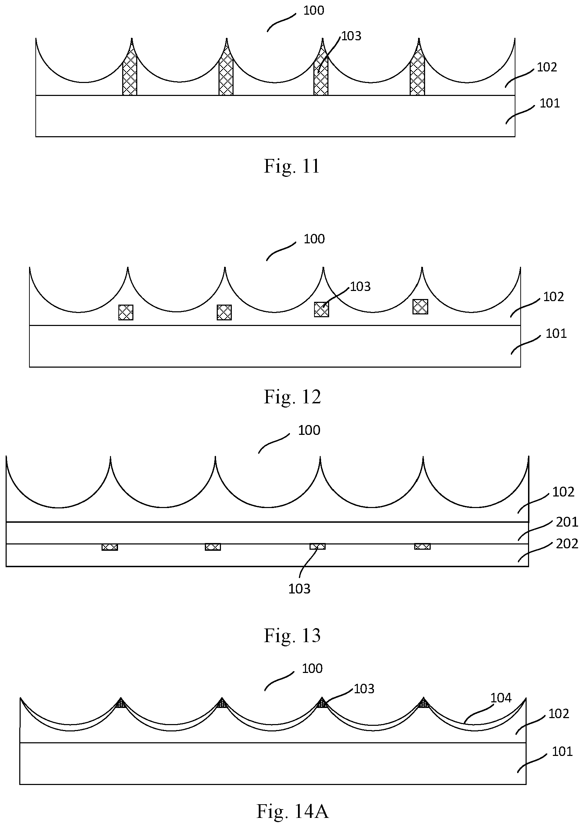

Referring to Fig. 11, in some embodiments, one end of the light-shading structure 103 away from the substrate 101 in the thickness direction of the substrate 101 may extends to a junction between corresponding lenses 102; and one end close to the substrate 101 may extend to one side of the substrate 101 close to the at least two lenses 102.

Referring to Fig. 12, in some embodiments, the light-shading structure 103 may be wholly arranged inside the at least two lenses 102.

Referring to Fig. 13, in some embodiments, the substrate may be a partial substrate 201; and the light-shading structure 103 may be arranged at the surface of the partial substrate 201;
where one side, provided with the light-shading structure 103, of the partial substrate 201 may be provided with a filling material 202. Optionally, the filling material 202 may include a substrate material.

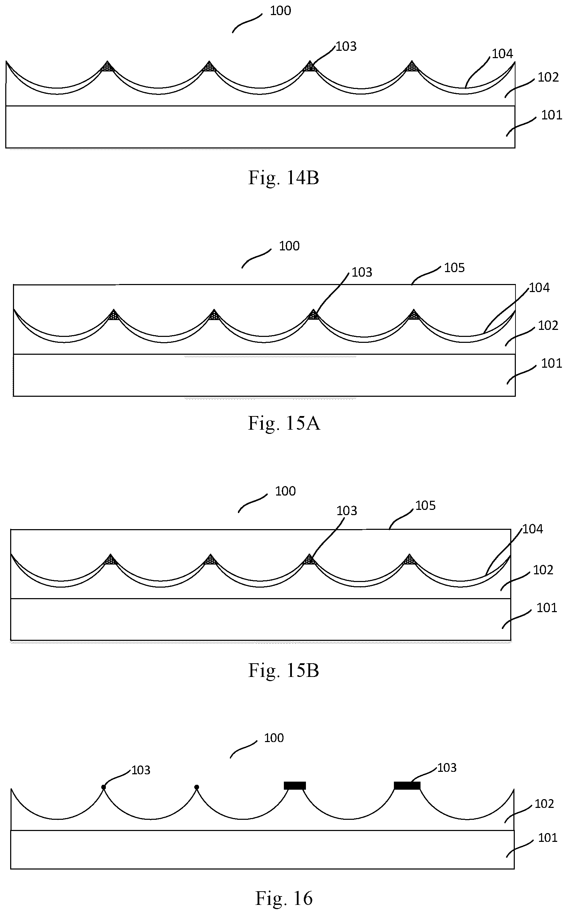

Referring to Figs. 14A and 14B, in some embodiments, an anti-reflection layer 104 may be arranged at surfaces of the at least two lenses 102. Optionally, the anti-reflection layer 104 may include an anti-reflection material.

Referring to Figs. 15A and 15B, in some embodiments, surfaces of the anti-reflection layers 104 may be provided with a covering layer 105. Optionally, the substrate 101 may be made of a material with a first refractive index; the covering layer 105 may be made of a material with a second refractive index; and the first refractive index may be greater than the second refractive index.

In some embodiments, part or all of adjacent lenses 102 in the at least two lenses 102 may be gapless or gapped.

Referring to Figs. 1-15B, all the adjacent lenses 102 in the at least two lenses 102 may be gapless.

Referring to Fig. 16, in some embodiments, part of adjacent lenses 102 in the at least two lenses 102 may be gapless or gapped.

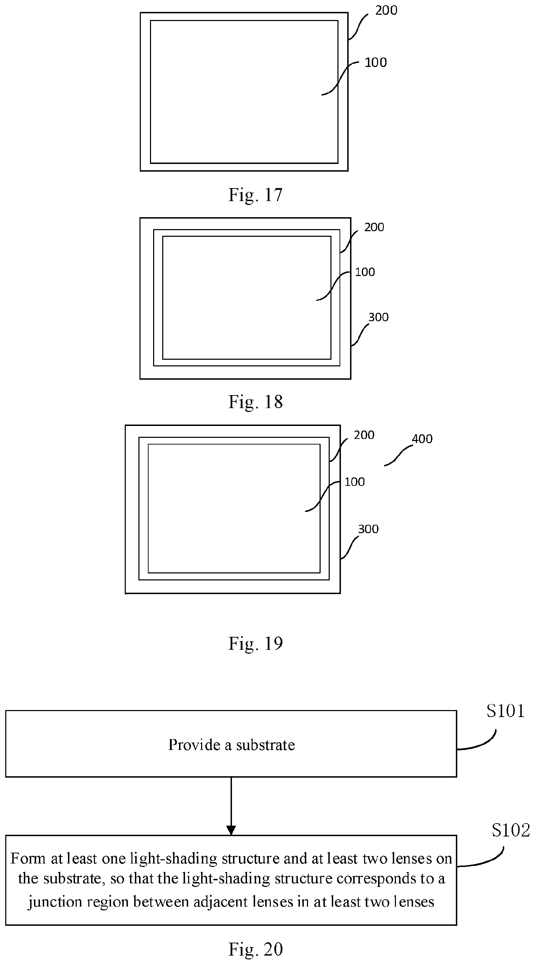

Referring to Fig. 17, embodiments of the present disclosure further provide a display module 200, including the lens grating 100.

Referring to Fig. 18, embodiments of the present disclosure further provide a display screen 300, including the display module 200.

Referring to Fig. 19, embodiments of the present disclosure further provide a display 400, including the display screen 300.

Referring to Fig. 20, in some embodiments, a manufacturing method of the lens grating is further provided and may include:
S101, providing a substrate 101;
S102, forming at least one light-shading structure 103 and at least two lenses 102 on the substrate 101, so that the light-shading structure 103 corresponds to a junction region between adjacent lenses 102 in the at least two lenses 102.

In some embodiments, in the step S101, the provided substrate 101 may be a whole substrate.

In some embodiments, the at least two lenses 102 formed may include at least one of concave lenses and convex lenses.

Embodiments of the present disclosure are described below by taking a case that the lenses 102 may be concave lenses as an example.

In some embodiments, the at least two lenses 102 may include lenticular lenses 1021; and forming the at least two lenses 102 on the substrate 101 may include:
arranging part or all of the lenticular lenses 1021 on the substrate 101 in parallel.

Referring to Fig. 2A, in some embodiments, all of the lenticular lenses 1021 may be arranged on the substrate 101 in parallel.

Referring to Fig. 2B, in some embodiments, part of the lenticular lenses 1021 may be arranged on the substrate 101 in parallel. Optionally, part of the lenticular lenses 1021 may be arranged on the substrate 101 according to a preset direction; the preset direction may include a direction forming a preset angle with the arrangement direction of the lenticular lenses 1021 arranged in parallel; and the setting of the preset angle may be considered according to actual conditions such as process requirements.

In some embodiments, the at least two lenses 102 may include spherical lenses 1022; and forming the at least two lenses 102 on the substrate 101 may include:
arranging part or all of the spherical lenses 1022 on the substrate 101 in array.

Referring to Fig. 2C, in some embodiments, all of the spherical lenses 1022 may be arranged on the substrate 101 in array.

Referring to Fig. 2D, in some embodiments, part of the spherical lenses 1022 may be arranged on the substrate 101 in array. Optionally, the number of spherical lenses 1022 and spatial arrangement of the spherical lenses 1022 on the substrate 101 may be determined according to actual conditions such as process requirements.

Referring to Fig. 2E, in some embodiments, the at least two lenses 102 may include lenticular lenses 1021 and spherical lenses 1022; all the lenticular lenses 1021 may be arranged on the substrate 101 in parallel; and all the spherical lenses 1022 may be arranged on the substrate 101 in array.

Referring to Fig. 3, in some embodiments, a length of the lenticular lens 1021 in an axial direction of the lenticular lens 1021 may be set to be the same as a length of the light-shading structure 103 in the axial direction of the lenticular lens 1021. The setting of the length of the lenticular lens 1021 in the axial direction and the length of the light-shading structure 103 in the axial direction of the lenticular lens 1021 may be considered according to actual conditions such as process requirements.

In some embodiments, part or all of adjacent lenses 102 in the at least two lenses 102 may be set to be gapless or gapped.

Referring to Figs. 1-15B, all the adjacent lenses 102 in the at least two lenses 102 may be set to be gapless.

Referring to Fig. 16, in some embodiments, part of adjacent lenses 102 in the at least two lenses 102 may be set to be gapless or gapped.

In some embodiments, in the step S 102, forming at least one light-shading structure 103 and at least two lenses 102 on the substrate 101 may include:
forming at least one light-shading structure 103 and at least two lenses 102 on one side of the substrate 101 integrally, where the light-shading structure 103 may be arranged at a junction between adjacent lenses 102 in the at least two lenses 102.

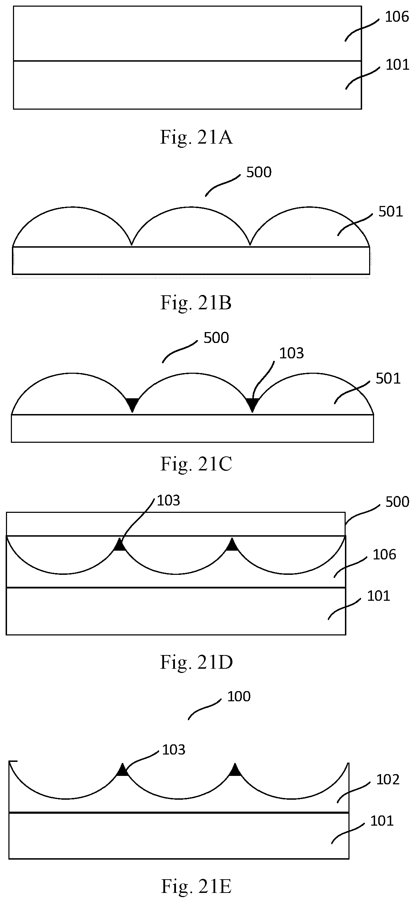

Referring to Fig. 21A, in some embodiments, a filling material 106 for manufacturing the at least two lenses 102 may be arranged at one side of the substrate 101. Optionally, the filling material 106 may include a lens material.

Referring to Fig. 21B, in some embodiments, an imprint template 500 having a lens 501 with a preset shape corresponding to the at least two lenses 102 may be manufactured. Optionally, the preset shape may be a shape of the convex lens corresponding to the shape of the concave lens; the lenses 102 may be concave lenses; and the lenses 501 may be convex lenses.

Referring to Fig. 21C, in some embodiments, a light shading material 103 may be arranged at a junction between adjacent lenses 501 in the imprint template 500. Optionally, the light shading material 103 may be uncured or partially cured.

Referring to Fig. 21D, in some embodiments, the filling material 106 may be imprinted and cured with the imprint template 500.

Referring to Fig. 21E, in some embodiments, the imprint template 500 may be separated to integrally form at least one light-shading structure 103 and at least two lenses 102.

In some embodiments, in the step S 102, forming at least one light-shading structure 103 and at least two lenses 102 on the substrate 101 may include:
forming at least two lenses 102 on one side of the substrate 101;
forming at least one light-shading structure 103 on the substrate 101; or, forming at least one light-shading structure 103 on the at least two lenses 102; or, forming at least one light-shading structure 103 on the substrate 101 and at least two lenses 102, respectively.

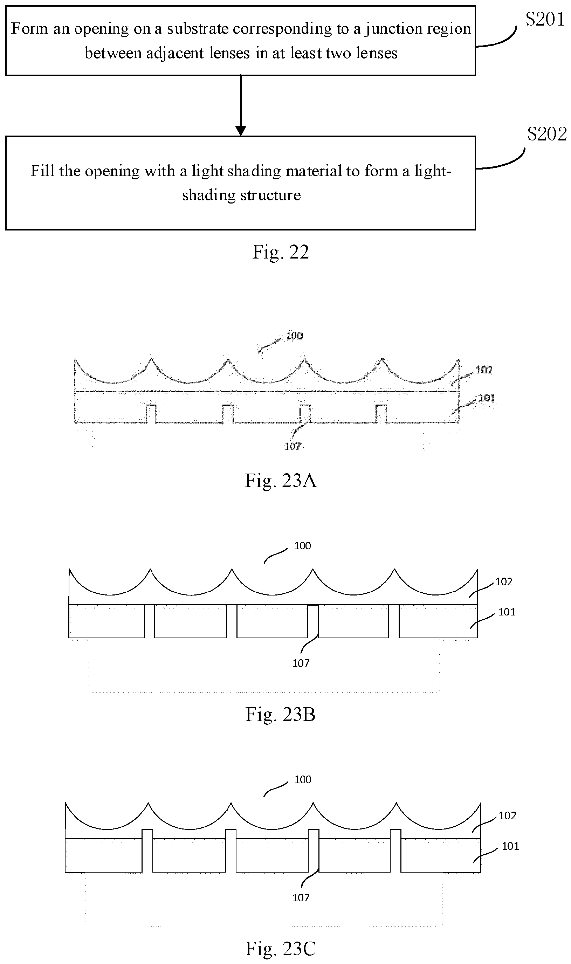

Referring to Fig. 22, in some embodiments, forming at least one light-shading structure 103 on the substrate 101 may include:
S201, forming an opening 107 corresponding to a junction region between adjacent lenses 102 in the at least two lenses 102 along a thickness direction of the substrate 101;
5202, filling the opening 107 with the light shading material to form the light-shading structure 103.

In some embodiments, forming the opening 107 along the thickness direction of the substrate 101 may include:
forming the opening 107 from one side of the substrate 101 away from the at least two lenses 102, so that the opening 107 extends to the interior of the substrate 101, or penetrates through the substrate 101, or extends to the interior of a corresponding lens 102, or extends to the junction between corresponding lenses 102.

Referring to Fig. 23A, in some embodiments, the opening 107 may be formed from one side of the substrate 101 away from the at least two lenses 102; and the formed opening 107 may extend to the interior of the substrate 101.

Referring to Fig. 23B, in some embodiments, the opening 107 may be formed from one side of the substrate 101 away from the at least two lenses 102; and the formed opening 107 may penetrate through the substrate 101.

Referring to Fig. 23C, in some embodiments, the opening 107 may be formed from one side of the substrate 101 away from the at least two lenses 102; and the formed opening 107 may extend to the interior of a corresponding lens 102.

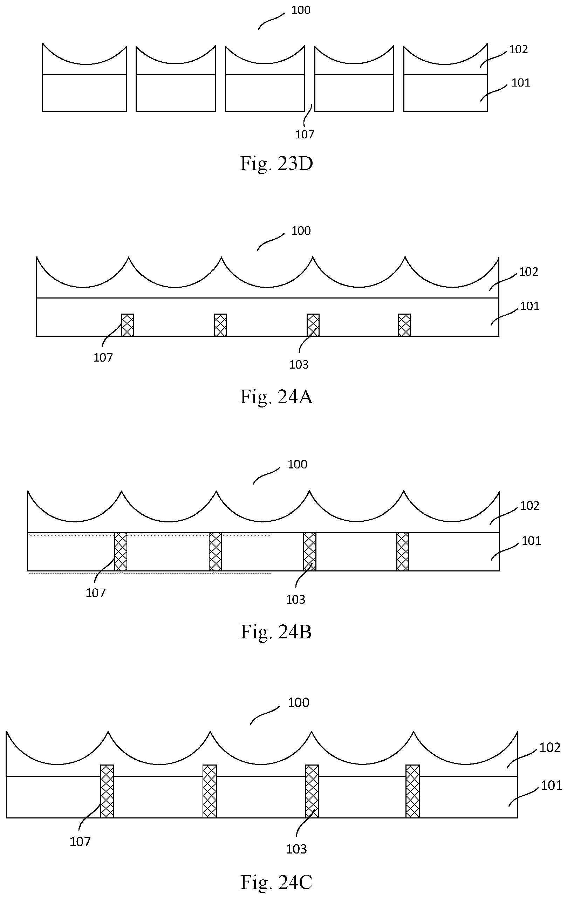

Referring to Fig. 23D, in some embodiments, the opening 107 may be formed from one side of the substrate 101 away from the at least two lenses 102; and the formed opening 107 may extend to a junction between corresponding lenses 102.

Referring to Fig. 24A, in some embodiments, the opening 107 may extend to the interior of the substrate 101; the opening 107 may be wholly filled with the light shading material; and the formed light-shading structure 103 may extend to the interior of the substrate 101.

Referring to Fig. 24B, in some embodiments, the opening 107 may penetrate through the substrate 101; the opening 107 may be wholly filled with the light shading material; and the formed light-shading structure 103 may penetrate through the substrate 101.

Referring to Fig. 24C, in some embodiments, the opening 107 may extend to the interior of a corresponding lens 102; the opening 107 may be wholly filled with the light shading material; and the formed light-shading structure 103 may extend to the interior of the corresponding lens 102.

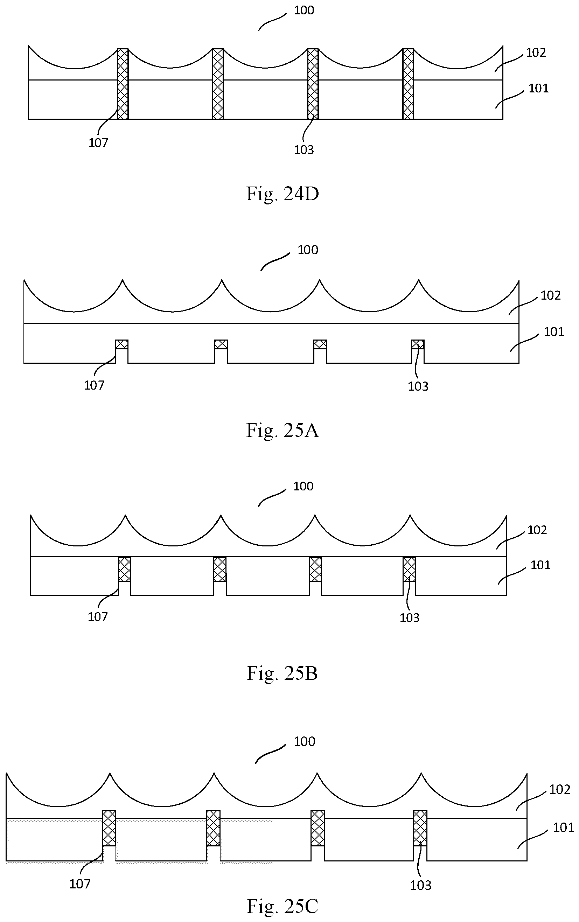

Referring to Fig. 24D, in some embodiments, the opening 107 may extend to a junction between corresponding lenses 102; the opening 107 may be wholly filled with the light shading material; and the formed light-shading structure 103 may extend to the junction between the corresponding lenses 102.

Referring to Fig. 25A, in some embodiments, the opening 107 may extend to the interior of the substrate 101; and the opening 107 may be partially filled with the light shading material to form the light-shading structure 103.

Referring to Fig. 25B, in some embodiments, the opening 107 may penetrate through the substrate 101; and the opening 107 may be partially filled with the light shading material to form the light-shading structure 103.

Referring to Fig. 25C, in some embodiments, the opening 107 may extend to the interior of a corresponding lens 102; and the opening 107 may be partially filled with the light shading material to form the light-shading structure 103.

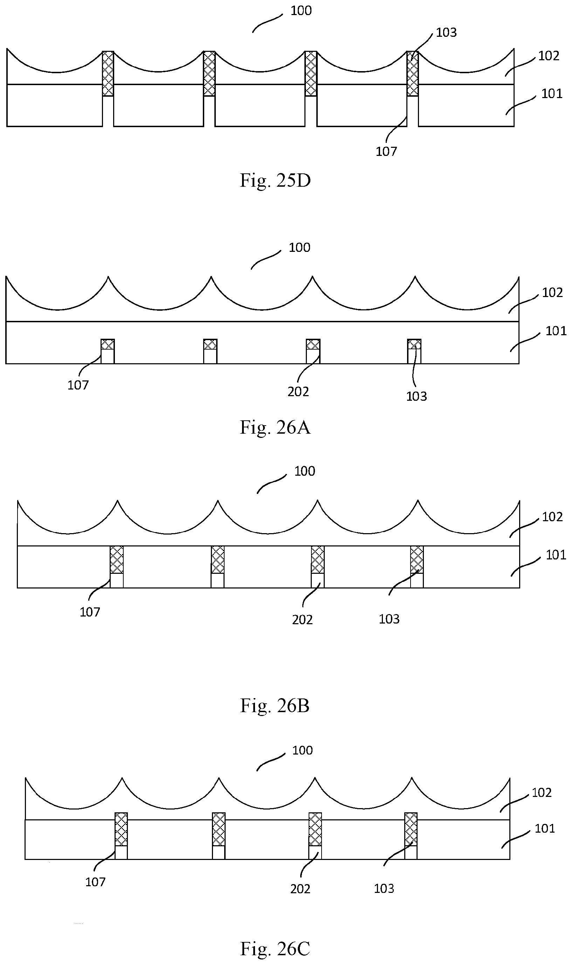

Referring to Fig. 25D, in some embodiments, the opening 107 may extend to a junction between corresponding lenses 102; and the opening 107 may be partially filled with the light shading material to form the light-shading structure 103.

Referring to Fig. 26A, in some embodiments, the opening 107 may extend to the interior of the substrate 101; and the opening 107 may be partially filled with the light shading material to form the light-shading structure 103. A filling material 202 may be arranged at the surface of the light shading material after the light-shading structure 103 is formed. Optionally, the filling material 202 may include at least one of a substrate material and a lens material.

Referring to Fig. 26B, in some embodiments, the opening 107 may penetrate through the substrate 101; the opening 107 may be partially filled with the light shading material to form the light-shading structure 103; and the filling material 202 may be arranged at the surface of the light shading material after the light-shading structure 103 is formed.

Referring to Fig. 26C, in some embodiments, the opening 107 may extend to the interior of a corresponding lens 102; the opening 107 may be partially filled with the light shading material to form the light-shading structure 103; and the filling material 202 may be arranged at the surface of the light shading material after the light-shading structure 103 is formed.

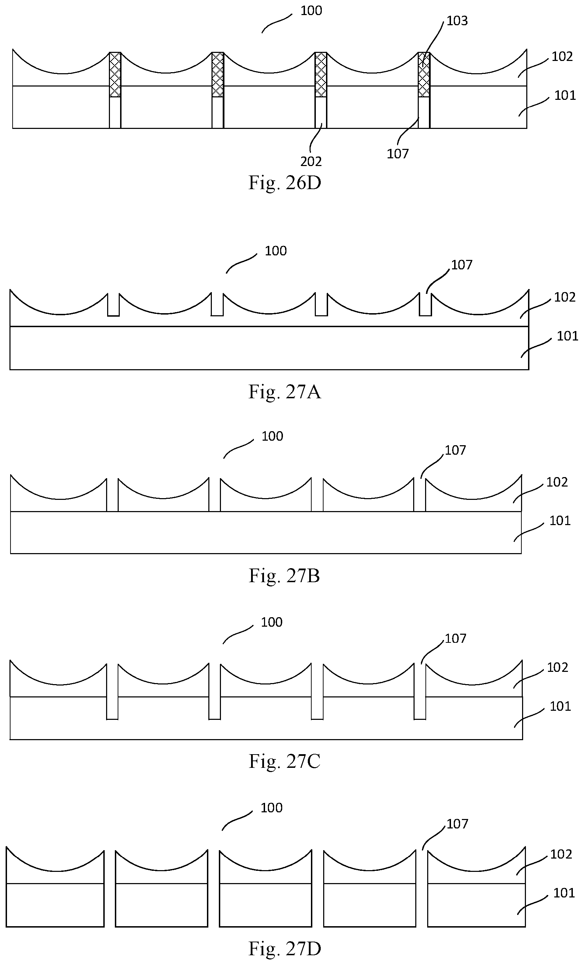

Referring to Fig. 26D, in some embodiments, the opening 107 may extend to a junction between corresponding lenses 102; the opening 107 may be partially filled with the light shading material to form the light-shading structure 103; and the filling material 202 may be arranged at the surface of the light shading material after the light-shading structure 103 is formed.

Referring to Figs. 1 and 16, forming at least one light-shading structure 103 on the at least two lenses 102 may include:
forming the light-shading structure 103 at a junction between adjacent lenses 102 in the at least two lenses 102.

In some embodiments, forming the at least one light-shading structure 103 on the at least two lenses 102 may include:
forming an opening 107 corresponding to a junction region between adjacent lenses 102 in the at least two lenses 102 along a thickness direction of the substrate 101;
filling the opening 107 with the light shading material to form the light-shading structure 103.

In some embodiments, forming an opening 107 corresponding to a junction region between adjacent lenses 102 in the at least two lenses 102 along a thickness direction of the substrate 101 may include:
forming the opening 107 from one side of the at least two lenses 102 away from the substrate 101, so that the opening 107 may extend to the interior of a corresponding lens 102, or extend to one side of the substrate 101 close to the at least two lenses 102, or extend to the interior of the substrate 101, or extend to one side of the substrate 101 away from the at least two lenses 102.

Referring to Fig. 27A, in some embodiments, the opening 107 may be formed from one side of the at least two lenses 102 away from the substrate 101, so that the formed opening 107 may extend to the interior of a corresponding lens 102.

Referring to Fig. 27B, in some embodiments, the opening 107 may be formed from one side of the at least two lenses 102 away from the substrate 101, so that the formed opening 107 may extend to one side of the substrate 101 close to the at least two lenses 102.

Referring to Fig. 27C, in some embodiments, the opening 107 may be formed from one side of the at least two lenses 102 away from the substrate 101, so that the formed opening 107 may extend to the interior of the substrate 101.

Referring to Fig. 27D, in some embodiments, the opening 107 may be formed from one side of the at least two lenses 102 away from the substrate 101, so that the formed opening 107 may extend to one side of the substrate 101 away from the at least two lenses 102.

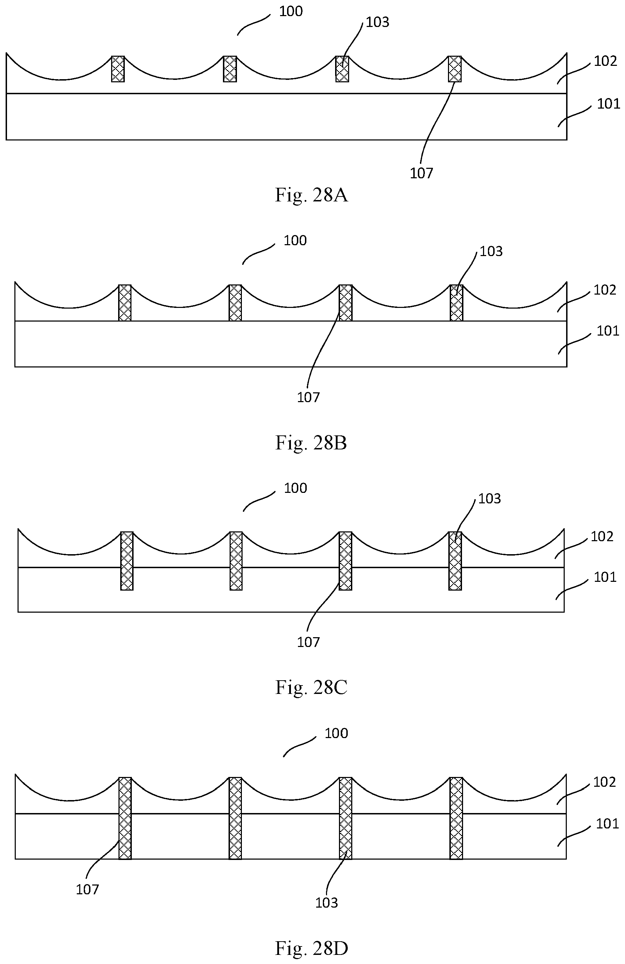

Referring to Fig. 28A, in some embodiments, the opening 107 may extend to the interior of a corresponding lens 102; the opening 107 may be wholly filled with the light shading material; and the formed light-shading structure 103 may extend to the interior of the corresponding lens 102.

Referring to Fig. 28B, in some embodiments, the opening 107 may extend to one side of the substrate 101 close to the at least two lenses 102; the opening 107 may be wholly filled with the light shading material; and the formed light-shading structure 103 may extend to the side of the substrate 101 close to the at least two lenses 102.

Referring to Fig. 28C, in some embodiments, the opening 107 may extend into the substrate 101; the opening 107 may be wholly filled with the light shading material; and the formed light-shading structure 103 may extend to the interior of the substrate 101.

Referring to Fig. 28D, in some embodiments, the opening 107 may extend to one side of the substrate 101 away from the at least two lenses 102; the opening 107 may be wholly filled with the light shading material; and the formed light-shading structure 103 may extend to the side of the substrate 101 away from the at least two lenses 102.

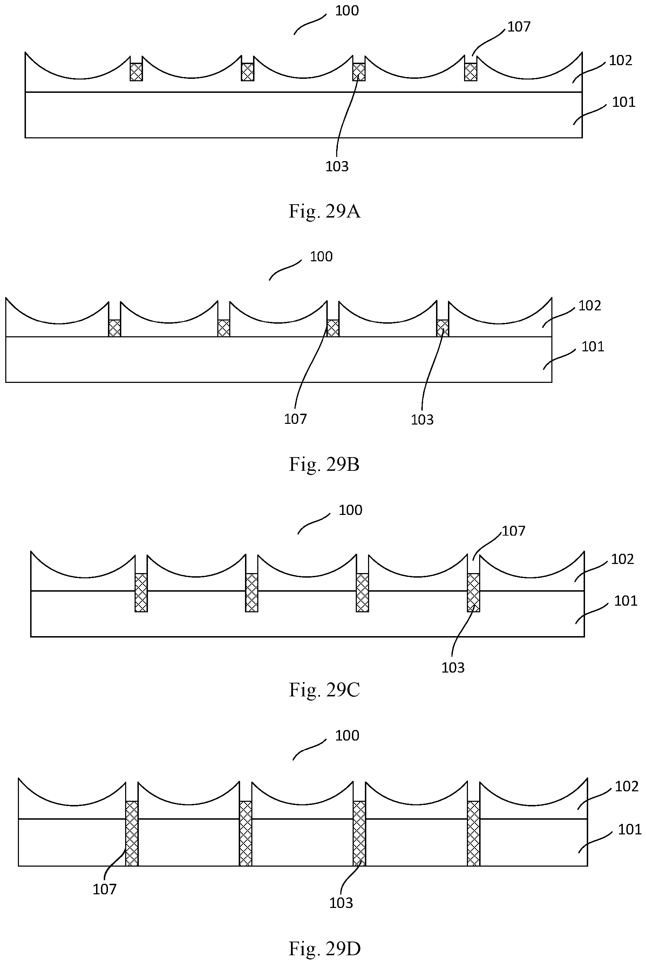

Referring to Fig. 29A, in some embodiments, the opening 107 may extend to the interior of a corresponding lens 102; and the opening 107 may be partially filled with the light shading material to form the light-shading structure 103.

Referring to Fig. 29B, in some embodiments, the opening 107 may extend to one side of the substrate 101 close to the at least two lenses 102; and the opening 107 may be partially filled with the light shading material to form the light-shading structure 103.

Referring to Fig. 29C, in some embodiments, the opening 107 may extend to the interior of the substrate 101; and the opening 107 may be partially filled with the light shading material to form the light-shading structure 103.

Referring to Fig. 29D, in some embodiments, the opening 107 may extend to one side of the substrate 101 away from the at least two lenses 102; and the opening 107 may be partially filled with the light shading material to form the light-shading structure 103.

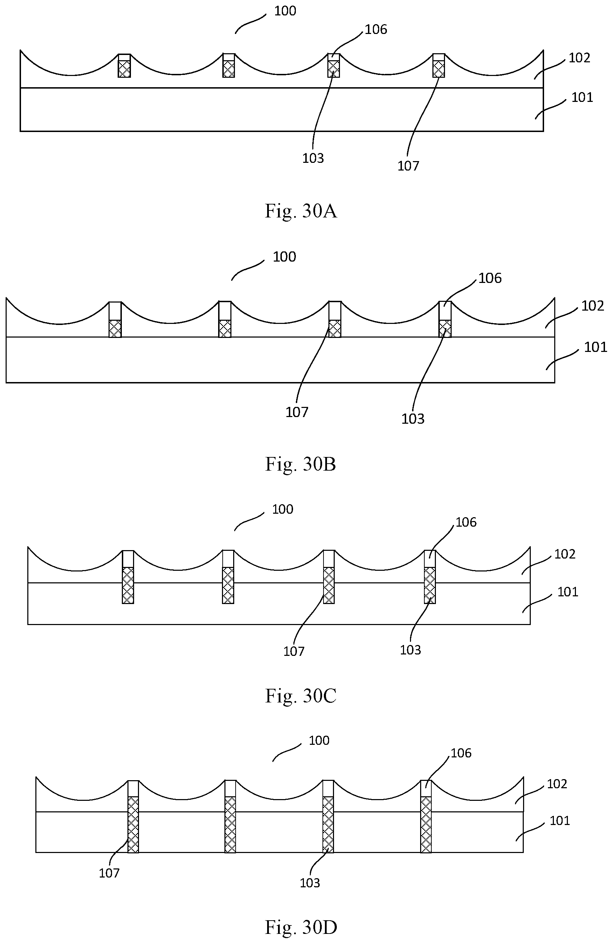

Referring to Fig. 30A, in some embodiments, the opening 107 may extend to the interior of a corresponding lens 102; the opening 107 may be partially filled with the light shading material to form the light-shading structure 103; and the filling material 106 may be arranged at the surface of the light shading material after the light-shading structure 103 is formed. Optionally, the filling material 106 may include at least one of a substrate material and a lens material.

Referring to Fig. 30B, in some embodiments, the opening 107 may extend to one side of the substrate 101 close to the at least two lenses 102; the opening 107 may be partially filled with the light shading material to form the light-shading structure 103; and the filling material 106 may be arranged at the surface of the light shading material after the light-shading structure 103 is formed.

Referring to Fig. 30C, in some embodiments, the opening 107 may extend to the interior of the substrate 101; the opening 107 may be partially filled with the light shading material to form the light-shading structure 103; and the filling material 106 may be arranged at the surface of the light shading material after the light-shading structure 103 is formed.

Referring to Fig. 30D, in some embodiments, the opening 107 may extend to one side of the substrate 101 away from the at least two lenses 102; the opening 107 may be partially filled with the light shading material to form the light-shading structure 103; and the filling material 106 may be arranged at the surface of the light shading material after the light-shading structure 103 is formed.

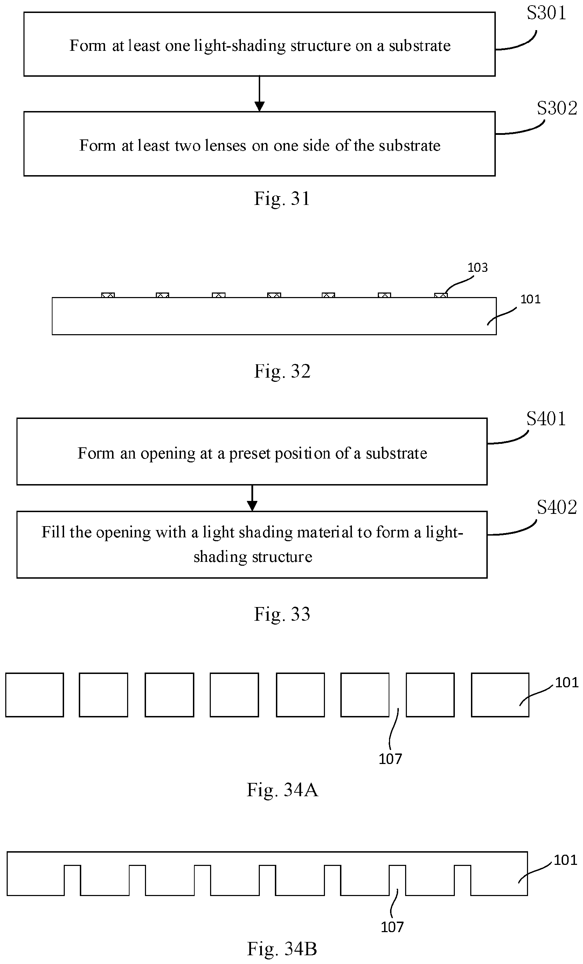

Referring to Fig. 31, in some embodiments, forming at least one light-shading structure 103 and at least two lenses 102 on the substrate 101 may include:
S301, forming at least one light-shading structure 103 on the substrate 101;
S302 forming at least two lenses 102 on one side of the substrate 101.

Referring to Fig. 32, in some embodiments, forming at least one light-shading structure 103 on the substrate 101 may include:
forming the light-shading structure 103 on the surface of the substrate 101. Optionally, a manufacturing process of forming the light-shading structure 103 on the surface of the substrate 101 may include at least one of: etching, filling, inkjet-printing, imprinting and screen printing; for example, the light-shading structure 103 may be formed on the surface of the substrate 101 corresponding to a junction region between adjacent lenses 102 in an inkjet-printing mode.

Referring to Fig. 33, in some embodiments, forming at least one light-shading structure 103 on the substrate 101 may include:
S401, forming an opening 107 at a preset position of the substrate 101;
S402, filling the opening 107 with the light shading material to form the light-shading structure 103.

In some embodiments, forming the opening 107 at the preset position of the substrate 101 may include:
forming the opening 107 from one side of the substrate 101 along a thickness direction of the substrate 101, so that the opening 107 may extend to the interior of the substrate 101 or extend to the other side of the substrate 101.

Referring to Fig. 34A, in some embodiments, the opening 107 may extend to the other side of the substrate 101.

Referring to Fig. 34B, in some embodiments, the opening 107 may extend to the interior of the substrate 101.

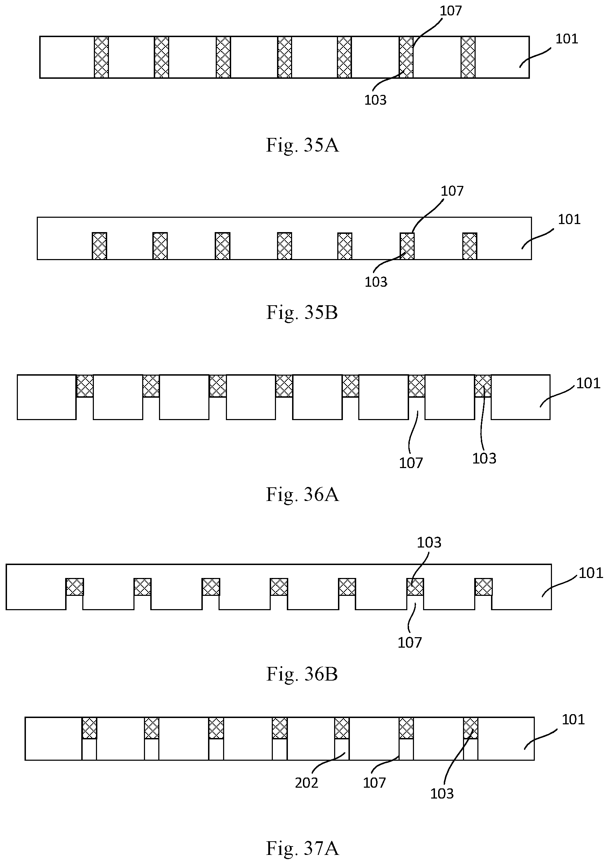

Referring to Fig. 35A, in some embodiments, the opening 107 may extend to the other side of the substrate 101; and the opening 107 may be wholly filled with the light shading material to form the light-shading structure 103.

Referring to Fig. 35B, in some embodiments, the opening 107 may extend to the interior of the substrate 101; and the opening 107 may be wholly filled with the light shading material to form the light-shading structure 103.

Referring to Fig. 36A, in some embodiments, the opening 107 may extend to the other side of the substrate 101; and the opening 107 may be partially filled with the light shading material to form the light-shading structure 103.

Referring to Fig. 36B, in some embodiments, the opening 107 may extend to the interior of the substrate 101; and the opening 107 may be partially filled with the light shading material to form the light-shading structure 103.

Referring to Fig. 37A, in some embodiments, the opening 107 may extend to the other side of the substrate 101; and the filling material 202 may be arranged at the surface of the light shading material after the opening 107 is partially filled with the light shading material to form the light-shading structure 103. Optionally, the filling material 202 may include at least one of a substrate material and a lens material.

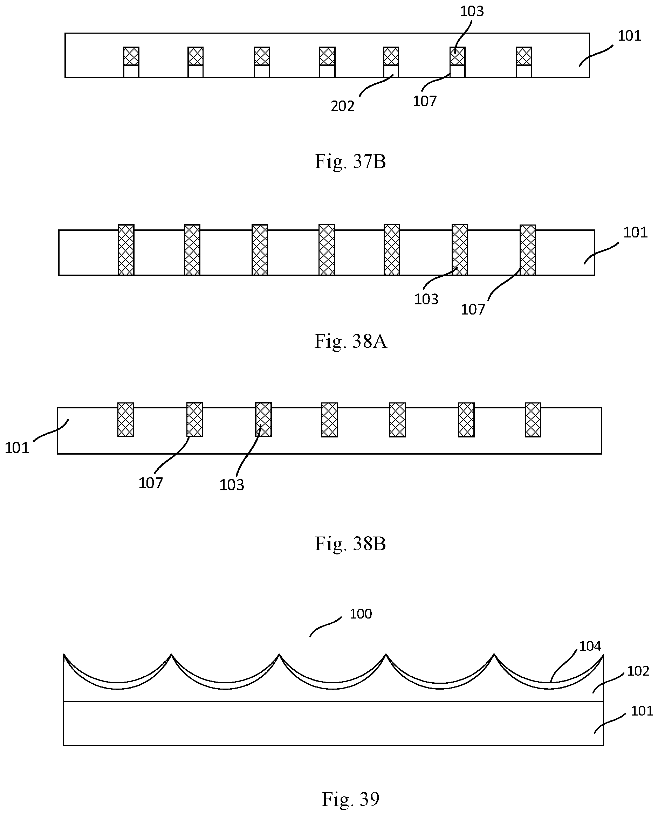

Referring to Fig. 37B, in some embodiments, the opening 107 may extend to the interior of the substrate 101; and the filling material 202 may be arranged at the surface of the light shading material after the opening 107 is partially filled with the light shading material to form the light-shading structure 103.

Referring to Fig. 38A, in some embodiments, the opening 107 may extend to the other side of the substrate 101; after the opening 107 is wholly filled with the light shading material, in some embodiments, a region on the surface of the substrate 101 corresponding to an opening end of the opening 107 may be filled with the light shading material, so that one portion of the formed light-shading structure 103 may protrude from the surface of the substrate 101.

Referring to Fig. 38B, in some embodiments, the opening 107 may extend to the interior of the substrate 101; after the opening 107 is wholly filled with the light shading material, a region on the surface of the substrate 101 corresponding to an opening end of the opening 107 may be filled with the light shading material, so that one portion of the formed light-shading structure 103 may protrude from the surface of the substrate 101.

In some embodiments, forming the at least two lenses 102 on one side of the substrate 101 may include:
arranging at least two lenses 102 on one side of the light-shading structure 103 protruding from the substrate 101 on the substrate 101, so that a portion of the light-shading structure 103 protruding from the surface of the substrate 101 corresponds to a junction region between adjacent lenses 102 in the at least two lenses 102.

Referring to Fig. 13, in some embodiments, the provided substrate 101 may be a partial substrate 201.

After forming the at least one light-shading structure 103 on the substrate 101, the manufacturing method further includes:
arranging a filling material 202 on one side, provided with the light-shading structure, of the partial substrate 201. Optionally, the filling material 202 may include a substrate material.

Referring to Fig. 1, in some embodiments, at least two lenses 102 may be formed on one side of the substrate 101; and the light-shading structure 103 is formed at a junction between adjacent lenses 102 in the at least two lenses 102.

Referring to Fig. 14A, in some embodiments, anti-reflection layers 104 may be formed on surfaces of the at least two lenses 102 after the light-shading structure 103 is formed at a junction between adjacent lenses 102 in the at least two lenses 102.

In some embodiments, forming the anti-reflection layers 104 on the surfaces of the at least two lenses 102 may include:
depositing an anti-reflection material on the surfaces of the at least two lenses 102 to form the anti-reflection layers 104.

Referring to Fig. 15A, a covering layer 105 may be formed on the surfaces of the anti-reflection layers 104 after the anti-reflection layers 104 are formed on the surfaces of the at least two lenses 102.

In some embodiments, providing the substrate 101 may include: manufacturing the substrate 101 by a material with a first refractive index; and forming the covering layer 105 on the surfaces of the anti-reflection layers 104 may include: manufacturing the covering layer 105 by a material with a second refractive index on the surfaces of the anti-reflection layers 104, where the first refractive index may be greater than the second refractive index.

Referring to Fig. 39, in some embodiments, at least two lenses 102 may be formed on one side of the substrate 101; and the light-shading structure 104 is formed on the surfaces of the at least two lenses 102.

Referring to Fig. 14B, in some embodiments, after anti-reflection layers 104 are formed on the surfaces of the at least two lenses 102, the light-shading structure 103 may be formed at a junction between adjacent lenses 102 in the at least two lenses 102 on concave surfaces of the anti-reflection layers 104.

Referring to Fig. 15B, in some embodiments, the covering layer 105 may be formed on the surfaces of the anti-reflection layers 104 after the light-shading structure 103 is formed at the junction between adjacent lenses 102 in the at least two lenses 102 on the concave surfaces of the anti-reflection layers 104.

In some embodiments, forming the covering layer 105 on surfaces of the anti-reflection layers 104 and the light-shading structures 103 may include:
coating a material with a second refractive index on the surfaces of the anti-reflection layers 104 and the light-shading structures 103 to form the covering layer 105.

Optionally, light emitted by the subpixels reaches the lenses through the substrate, and then exits through a lens interface; stray light generated by a distortion region between adjacent lenses is shaded by the light-shading structure; and the setting of the anti-reflection layers is capable of effectively reducing the stray light caused by reflection of the lens interface, thereby improving display quality of 3D images.

The above description and drawings sufficiently illustrate the embodiments of the present disclosure to enable those skilled in the art to practice them. Other embodiments may comprise structural, logical, electrical, process, and other changes. The embodiments represent only possible changes. Unless expressly required, individual components and functions are optional and the order of operations may be changed. Parts and features of some embodiments may be included in or substituted for parts and features of other embodiments. The scope of the disclosed embodiments includes the full scope of the claims, and all available equivalents of the claims. When used in the present application, although the terms of "first", "second", etc. may be possibly used in the present application to describe various elements, these elements should not be limited by these terms. These terms are only used to distinguish one element from another. For example, without changing the meaning of the description, a first element may be called as a second element, and similarly, the second element may be called as the first element, as long as all of "the first elements" that appear are consistently renamed and all of "the second elements" that appear are consistently renamed. The first element and the second element are both elements, but may not be the same element. Moreover, the terms used in the present application are used to describe the embodiments only and not to limit the claims. As used in the illustration of the embodiments and the claims, unless clearly indicated in the context, the singular forms "a", "an" and "the" are also intended to include the plural forms. Similarly, the term "and/or" as used in the present application is meant to include any and all possible combinations of one or more of the associated listings. In addition, when used in the present application, the term "comprise" and its variations "comprises" and/or "comprising", etc., refer to the presence of stated features, integers, steps, operations, elements, and/or components, but does not preclude the presence or addition of one or more other features, integers, steps, operations, elements, components and/or groupings of these. Without further limitations, an element limited by the phrase "comprises a..." does not preclude the presence of additional identical elements in the process, method or device that includes the element. Herein, the difference of each embodiment from each other may be the focus of explanation. The same and similar parts among all of the embodiments may be referred to each other. For the method and product disclosed by the embodiments, if the method and product correspond to a method part disclosed by the embodiments, the description of the method part can be referred to for the related part.

Those skilled in the art may recognize that the units and algorithm steps of each example described in conjunction with the embodiments disclosed herein can be implemented in electronic hardware, or a combination of computer software and electronic hardware. Whether these functions are performed in hardware or software may depend on the specific application and design constraints of the technical solution. Those skilled in the art may use different methods for implementing the described functions for each particular application, but such implementations should not be considered beyond the scope of the embodiments of the present disclosure. Those skilled in the art may clearly understand that, for the convenience and brevity of description, the corresponding processes in the above method embodiments may be referred to for the working processes of the above systems, devices and units, which will not be repeated here.

In the embodiments disclosed herein, the disclosed method and product (including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units, that is, may be located in one place, or may be distributed on multiple network units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

In the drawings, considering clarity and description, the width, length and thickness of structures of components or layers can be exaggerated. When a structure of a component or layer is described to be "arranged" (or "installed" or "laid" or "fitted" or "coated" or similar illustration) "above" or "on" another component or layer, the structure of the component or layer may be directly "arranged" "above" or "on" another component or layer, or there may be a structure of an intermediate component or layer between the component or layer and another component or layer, or even a part of the component or layer is embedded in another component or layer.

## Claims

1. A lens grating, comprising a substrate and at least two lenses arranged at any side of the substrate;
wherein a light-shading structure is arranged corresponding to a junction region between adjacent lenses in the at least two lenses.

2. The lens grating according to claim 1, wherein the at least two lenses comprise concave lenses.

3. The lens grating according to claim 2, wherein the at least two lenses comprise at least one of lenticular lenses and spherical lenses.

4. The lens grating according to claim 3, wherein the at least two lenses comprise lenticular lenses; and part or all of the lenticular lenses are distributed in parallel.

5. The lens grating according to claim 4, wherein a length of the light-shading structure along an axial direction of the lenticular lens is same as an axial length of the lenticular lens.

6. The lens grating according to claim 3, wherein the at least two lenses comprise spherical lenses; and part or all of the spherical lenses are distributed in array.

7. The lens grating according to claim 1, wherein the light-shading structure penetrates through the substrate in a thickness direction of the substrate.

8. The lens grating according to claim 1, wherein one end of the light-shading structure in a thickness direction of the substrate penetrates through the substrate.

9. The lens grating according to claim 8, wherein one end of the light-shading structure comprises at least one of followings:
one end of the light-shading structure close to the at least two lenses;
one end of the light-shading structure away from the at least two lenses.

10. The lens grating according to claim 7 or 9, wherein one end of the light-shading structure close to the at least two lenses protrudes from a surface of the substrate close to the at least two lenses.

11. The lens grating according to claim 10, wherein a portion of the light-shading structure protruding from a surface of the substrate extends to an interior of a corresponding lens or extends to a junction between corresponding lenses.

12. The lens grating according to claim 10, wherein a projected area of a portion of the light-shading structure protruding from a surface of the substrate on a surface of the substrate is same as a projected area of a portion of the light-shading structure in the substrate on a surface of the substrate; or
a projected area of a portion of the light-shading structure protruding from a surface of the substrate on a surface of the substrate is greater than a projected area of a portion of the light-shading structure in the substrate on a surface of the substrate; or
a projected area of a portion of the light-shading structure protruding from a surface of the substrate on a surface of the substrate is smaller than a projected area of a portion of the light-shading structure in the substrate on a surface of the substrate.

13. The lens grating according to claim 1, wherein the light-shading structure is wholly arranged in the substrate.

14. The lens grating according to claim 1, wherein the light-shading structure is arranged on a surface of the substrate close to at least two lenses.

15. The lens grating according to claim 1, wherein the light-shading structure is arranged at a junction between the adjacent lenses.

16. The lens grating according to claim 1, wherein one end of the light-shading structure away from the substrate along a thickness direction of the substrate extends to a junction between corresponding lenses, and one end close to the substrate extends to one side of the substrate close to the at least two lenses.

17. The lens grating according to claim 1, wherein the light-shading structure is wholly arranged in the at least two lenses.

18. The lens grating according to any one of claims 1-17, wherein the substrate is a whole substrate.

19. The lens grating according to claim 1, wherein the substrate is a partial substrate; and the light-shading structure is arranged at a surface of the partial substrate;
wherein a filling material is arranged at one side, provided with the light-shading structure, of the partial substrate.

20. The lens grating according to claim 1, wherein surfaces of the at least two lenses are provided with anti-reflection layers.

21. The lens grating according to claim 20, wherein surfaces of the anti-reflection layers are provided with a covering layer.

22. A display module, comprising the lens grating of any one of claims 1-21.

23. A display screen, comprising the display module of claim 22.

24. A display, comprising the display screen of claim 23.

25. A manufacturing method of a lens grating, comprising:
providing a substrate;
forming at least one light-shading structure and at least two lenses on the substrate, so that the light-shading structure corresponds to a junction region between adjacent lenses in the at least two lenses.

26. The manufacturing method of the lens grating according to claim 25, wherein the at least two lenses formed comprise concave lenses.

27. The method according to claim 26, wherein the at least two lenses comprise at least one of lenticular lenses and spherical lenses.

28. The method according to claim 27, wherein the at least two lenses comprise the lenticular lenses;
forming at least two lenses on the substrate comprises:
arranging part or all of the lenticular lenses on the substrate in parallel.

29. The method according to claim 28, further comprising:
setting an axial length of the lenticular lens to be same as a length of the light-shading structure along an axial direction of the lenticular lens.

30. The method according to claim 27, wherein the at least two lenses comprise the spherical lenses;
forming at least two lenses on the substrate comprises:
arranging part or all of the spherical lenses on the substrate in array.

31. The manufacturing method of the lens grating according to claim 25, wherein forming at least one light-shading structure and at least two lenses on the substrate comprises:
forming the at least one light-shading structure and the at least two lenses on one side of the substrate integrally, wherein the light-shading structure is arranged at a junction between adjacent lenses in the at least two lenses.

32. The manufacturing method of the lens grating according to claim 25, wherein forming at least one light-shading structure and at least two lenses on the substrate comprises:
forming the at least two lenses on one side of the substrate;
forming the at least one light-shading structure on the substrate; or, forming the at least one light-shading structure on the at least two lenses; or, forming the at least one light-shading structure on the substrate and the at least two lenses respectively.

33. The manufacturing method of the lens grating according to claim 32, wherein forming the at least one light-shading structure on the substrate comprises:
forming an opening in the substrate corresponding to a junction region between adjacent lenses in the at least two lenses along a thickness direction of the substrate;
filling the opening with a light shading material to form the light-shading structure.

34. The manufacturing method of the lens grating according to claim 33, wherein filling the opening with a light shading material comprises:
filling the opening with a light shading material wholly; or
filling the opening with a light shading material partially.

35. The manufacturing method of the lens grating according to claim 34, wherein after filling the opening with a light shading material partially, further comprising:
arranging a filling material on a surface of the light shading material.

36. The manufacturing method of the lens grating according to claim 33, wherein forming an opening along a thickness direction of the substrate comprises:
forming an opening from one side of the substrate away from the at least two lenses, so that the opening extends to an interior of the substrate, or penetrates through the substrate, or extends to an interior of a corresponding lens, or extends to a junction between corresponding lenses.

37. The manufacturing method of the lens grating according to claim 32, wherein forming the at least one light-shading structure on the at least two lenses comprises:
forming the light-shading structure at a junction between adjacent lenses in the at least two lenses.

38. The manufacturing method of the lens grating according to claim 32, wherein forming the at least one light-shading structure on the at least two lenses comprises:
forming an opening on the at least two lenses corresponding to a junction region between the adjacent lenses along a thickness direction of the substrate;
filling the opening with a light shading material to form the light-shading structure.

39. The manufacturing method of the lens grating according to claim 38, wherein forming an opening on the at least two lenses corresponding to a junction region between the adjacent lenses along a thickness direction of the substrate comprises:
forming an opening from one side of the at least two lenses away from the substrate, so that the opening extends to an interior of a corresponding lens, or extends to one side of the substrate close to the at least two lenses, or extends to an interior of the substrate, or extends to one side of the substrate away from the at least two lenses.

40. The manufacturing method of the lens grating according to claim 25, wherein forming at least one light-shading structure and at least two lenses on the substrate comprises:
forming the at least one light-shading structure on the substrate;
forming the at least two lenses on one side of the substrate.

41. The manufacturing method of the lens grating according to claim 40, wherein forming the at least one light-shading structure on the substrate comprises:
forming the light-shading structure on a surface of the substrate.

42. The manufacturing method of the lens grating according to claim 40, wherein forming the at least one light-shading structure on the substrate comprises:
forming an opening at a preset position of the substrate;
filling the opening with a light shading material to form the light-shading structure.

43. The manufacturing method of the lens grating according to claim 42, wherein forming an opening at a preset position of the substrate comprises:
forming an opening from one side of the substrate along a thickness direction of the substrate, so that the opening extends to an interior of the substrate or extends to the other side of the substrate.

44. The manufacturing method of the lens grating according to claim 42, wherein filling the opening with a light shading material comprises:
filling the opening with a light shading material wholly; or
filling the opening with a light shading material partially.

45. The manufacturing method of the lens grating according to claim 44, wherein after filling the opening with a light shading material partially, further comprising:
arranging a filling material on a surface of the light shading material.

46. The manufacturing method of the lens grating according to claim 44, wherein after filling the opening with a light shading material wholly, further comprising:
filling a region, corresponding to an opening end of the opening, on a surface of the substrate with the light shading material, so that one portion of the formed light-shading structure protrudes from a surface of the substrate.

47. The manufacturing method of the lens grating according to claim 46, wherein forming the at least two lenses on one side of the substrate comprises:
arranging the at least two lenses on one side of the substrate where the light-shading structure protrudes from the substrate, so that a portion, protruding from a surface of the substrate, of the light-shading structure corresponds to a junction region between adjacent lenses in the at least two lenses.

48. The manufacturing method of the lens grating according to any one of claims 25-47, wherein the substrate is a whole substrate.

49. The manufacturing method of the lens grating according to claim 25, wherein the substrate is a partial substrate;
after forming at least one light-shading structure on the substrate, further comprising:
arranging a filling material on one side, provided with the light-shading structure, of the partial substrate.

50. The manufacturing method of the lens grating according to claim 25, further comprising:
forming anti-reflection layers on surfaces of the at least two lenses.

51. The manufacturing method of the lens grating according to claim 50, wherein after forming anti-reflection layers on surfaces of the at least two lenses, further comprising:
forming a covering layer on surfaces of the anti-reflection layers.
